# EUROPÄISCHE PATENTSCHRIFT

(11) **EP 1 844 247 B1**
(45) Veröffentlichungstag und Bekanntmachung des Hinweises auf die Patenterteilung: **03.06.2009**
(21) Anmeldenummer: 06706202.6
(22) Anmeldetag: 12.01.2006
(51) Int. Cl.: F16D 55/00, F16D 1/09

(54) **VERBINDUNG EINER BREMSE MIT EINER ACHSE EINES FAHRZEUGES**
CONNECTION BETWEEN A BRAKE AND AN AXLE OF A VEHICLE
LIAISON ENTRE UN FREIN ET UN ESSIEU D'UN VEHICULE

(30) Priorität: 27.01.2005 DE 102005003770
(43) Veröffentlichungstag der Anmeldung: 17.10.2007
(73) Patentinhaber: KNORR-BREMSE SYSTEME FÜR NUTZFAHRZEUGE GMBH, 80809 München (DE)
(72) Erfinder: HÄRTL, Thomas, 94501 Beutelsbach (DE); WIMMER, Josef, 94474 Vilshofen (DE)
(74) Vertreter: Mattusch, Gundula
(86) Internationale Anmeldenummer: PCT/EP2006/000205
(87) Internationale Veröffentlichungsnummer: WO 2006/079450

(56) Entgegenhaltungen:
- DE-A1- 3 721 692
- DE-A1- 10 202 778
- DE-U1- 20 009 845
- GB-A- 1 194 411
- US-A- 2 960 358

## Beschreibung

Die vorliegende Erfindung betrifft eine Verbindung einer Bremse, insbesondere einer Scheibenbremse, mit einer Achse eines Fahrzeuges gemäß dem Oberbegriff des Anspruchs 1.

Für die Funktion insbesondere einer Scheibenbremse ist die verdrehgesicherte Anbindung eines Bremsteiles an einem gegenüber dem sich drehenden Rad starren Fahrzeugteil erforderlich, während die Bremsscheibe einer Scheibenbremse fest mit dem Rad verbunden ist.

Üblicherweise wird das Bremsteil an einem starren Achsanschluss befestigt, der beispielsweise als Achsflansch ausgebildet sein kann. Dabei erfolgt die Befestigung mittels Schrauben, die durch Bohrungen des Bremsteiles geführt und in Gewindelöcher des Achsflansches eingeschraubt sind. Je nach Ausführungsvariante der Bremse ist der Bremssattel unmittelbar oder über einen Bremsträger mittelbar an dem Achsanschluss befestigt, wobei der unmittelbare Anschluss des Bremssattels bei einer Fest- oder Schwenksattelbremse und der mittelbare Anschluss über den Bremsträger bei einer Schiebesattelbremse erfolgt. Hierzu wird auf die WO 02/14 708 A2 verwiesen.

Für die Verbindung der Bremse an der zugeordneten Achse bzw. dem Achsanschluss wird bislang eine bestimmte Konstellation von Durchgangsbohrungen und Gewindebohrungen hergestellt, die eine Verbindung nur in einer Winkelstellung der Bremse erlaubt.

Es ist somit für jeden davon abweichenden Einsatzfall eine entsprechende Auslegung zumindest des Achsanschlusses erforderlich, um unterschiedliche Anordnungspositionen zu realisieren. Diese Anordnungspositionen beziehen sich dabei auf die Drehrichtung der Bremsscheibe, das heißt, eine zweite Variante ist gegenüber einer ersten um einen in Drehrichtung des Rades versetzten Winkelbereich angeschlossen.

Naturgemäß ist dadurch ein universeller Einsatz der Achsanschlüsse nicht möglich. Für beispielsweise funktions- und/oder bauartbedingte unterschiedliche Montagepositionen der Bremsen müssen daher jeweils daran angepasste Achsen bzw. Achsanschlüsse hergestellt werden. Dies ist nur mit einem entsprechenden Fertigungsaufwand möglich, der einer wirtschaftlichen Herstellung und einer gewünschten Kostenminimierung entgegensteht. Dies wiegt umso schwerer, als diese Bauteile in großen Stückzahlen Verwendung finden.

Aus der DE 10202 778 A1 ist eine Verbindung einer Bremse mit einer Fahrzeugachse bekannt, die einen Adapterflansch aufweist, der für unterschiedliche Felgeneinpresstiefen und verschiedene Winkelstellungen einsetzbar ist. Die Befestigung dieses Adapters erfolgt mittels einer Vielzahl von Schrauben, die auf Scherung beansprucht werden. Darüber hinaus ist aufgrund des vorhandenen Spiels zwischen den Befestigungsbohrungen und den Schrauben ein Verrutschen bzw. Verdrehen der Bremse im Funktionsfall, also bei Einleitung eines Bremsmomentes gegeben, was sich nachteilig auf das Betriebsverhalten der Bremse insgesamt auswirkt.

Aus der DE 2201 885 A ist die axiale Verbindung zweier Bremsscheibenkomponenten mittels eines mit Nasen versehenen Adapters bekannt, die in Ausnehmungen eines Bremsrings eingreifen, der mittels eines Klemmrings am Adapter festklemmbar ist. Hierdurch sollen Bauteile aus unterschiedlichen Werkstoffen zu einer Baueinheit zusammengefasst werden mit dem Ziel, dass beim Verschleiß lediglich der Reibring und nicht eine komplette Bremsscheibe ausgetauscht werden muss.

Der Erfindung liegt die Aufgabe zugrunde, eine Verbindung der gattungsgemäßen Art so weiter zu entwickeln, dass eine Drehmomentenübertragung verbessert und die Betriebssicherheit dadurch erhöht wird. Diese Aufgabe wird durch eine Verbindung gelöst mit den Merkmalen des Anspruchs 1.

Mit Hilfe einer solchen Verbindung ist eine Befestigung der Bremse am Achsanschluss in einer Vielzahl von unterschiedlichen Winkelstellungen möglich, so dass die Achse bzw. der Achsanschluss für verschiedene Bremsenanordnungen eingesetzt werden kann. Auf die Bereitstellung unterschiedlich ausgebildeter Achsanschlüsse kann somit verzichtet werden, wodurch sich eine Verringerung der Kosten hinsichtlich der Herstellung und Lagerung ergibt.

Durch den Einsatz von Formschlussteilen zur Drehmomentenübertragung wird eine größere Sicherheit gegenüber reibschlüssigen Verbindungen erreicht, wie sie ebenfalls bisher zum Einsatz kommen und die in Abhängigkeit zur Materialpaarung steht, die eine fettfreie Oberfläche und eine bestimmte Oberflächenbehandlung bzw. -beschaffenheit erfordert.

Nach einer vorteilhaften Weiterbildung der Erfindung ist vorgesehen, den in seiner Außenkontur kreisförmigen Achsanschluss im Umfangsbereich umlaufend mit Ausnehmungen zu versehen, die vorzugsweise halblochförmig ausgebildet sind und die der Aufnahme der Formschlussteile dienen. Das zugeordnete Bremsenteil ist ebenfalls mit solchen Ausnehmungen versehen, so dass sich jeweils eine lochartige Aufnahme ergibt, wenn die Ausnehmungen, die im übrigen in ihrem Querschnittsabmaß gleich sind, aneinander liegen.

Während der Achsanschluss feststeht, ist die Bremse und mit dieser das Bremsenteil verdrehbar und in einer Lage positionierbar, die dem Winkelabstand der jeweiligen Ausnehmungen zueinander entspricht.

Entsprechend den Erfordernissen können mehrere Formschlussteile zur Verbindung der Bremse mit der Achse eingesetzt werden. Zweckmäßiger Weise sind die Ausnehmungen in gleichem Winkelabstand zueinander angeordnet und erstrecken sich in axialer Richtung.

Jedes Formschlussteil, das prinzipiell stiftförmig ausgebildet ist, weist eine Spreizhülse in Form einer Kegelbuchse auf, die gegen die Leibung der Ausnehmungen gepresst wird, wozu ein Spannelement, vorzugsweise ein Kegelbolzen, in der Kegelbuchse geführt und mit dieser verkeilt wird.

Durch die geschlitzte Spreizhülse werden Bearbeitungstoleranzen ausgeglichen, wodurch sich eine Optimierung des Traglastanteils einstellt. Des weiteren ist eine spielfreie Einstellung/Fixierung möglich.

Mit Hilfe einer Verdrehsicherung, die als Sicherungsscheibe verdrehsicher auf dem Spannelement geführt sein kann und formschlüssig in den Achsanschluss und/oder das Bremsenteil eingreift, wird die Montage des Formschlussteiles wesentlich vereinfacht.

Der das Spannelement bildende Kegelbolzen und die die Spreizhülse darstellende Kegelbuchse sind in ihrer Koniszität so ausgebildet, dass sich je nach Neigungswinkel eine Selbsthemmung ergibt, so dass der Formschluss und der daraus resultierende Traglastanteil in jedem Fall erhalten bleibt. Ein selbsttätiges Lösen wird durch die Selbsthemmung verhindert. Grundsätzlich kann auch eine Mutter, mit der der Kegelbolzen gegen die Kegelbuchse gepresst wird und die auf einen Gewindeansatz des Kegelbolzens aufgeschraubt ist, selbsthemmend ausgebildet sein, durch entsprechende Auswahl des Gewindes. Aber auch andere Sicherungen gegen ein der Mutter sind denkbar, wie eine Sicherungsscheibe, ein Sicherungssplint, eine klebende Schraubensicherung o.dgl.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine an einer Achse mittels einer erfindungsgemäßen Verbindung befestigte Bremse in unterschiedlichen Positionen angeordnet, jeweils in einer perspektivischen Darstellung

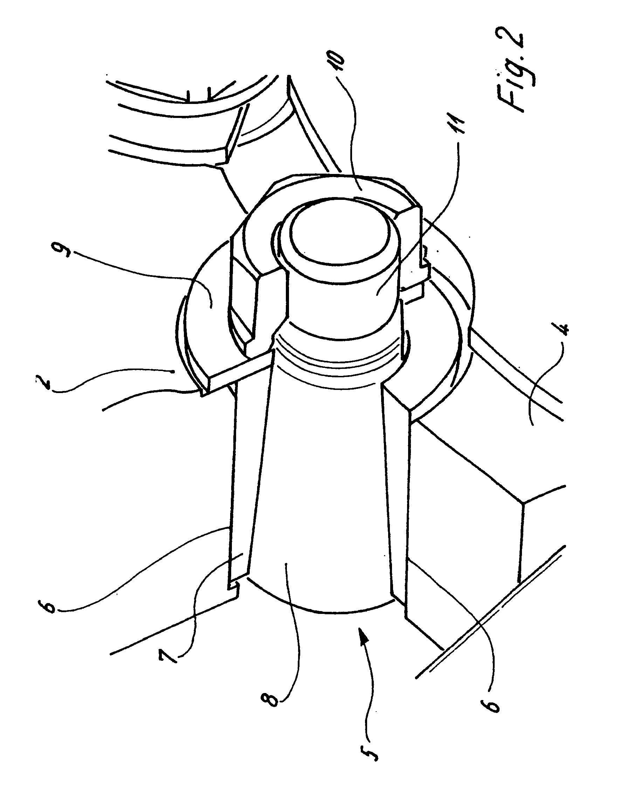

- Figur 2: eine Einzelheit der Darstellung nach Figur 1 in einer teilweise geschnittenen perspektivischen Ansicht
- Figur 3: eine Explosivdarstellung der Einzelheit nach Figur 2

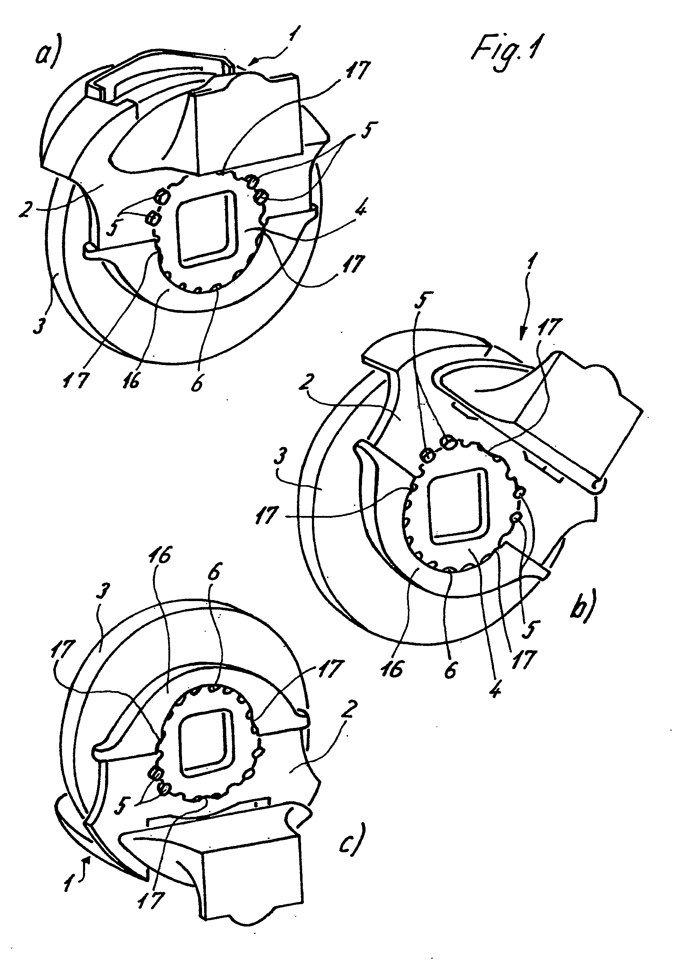

In der Figur 1 ist eine Bremse 1 in Form einer Scheibenbremse dargestellt, die mit einem Achsanschluss 4 einer im übrigen nicht dargestellten Achse eines vorzugsweise Nutzfahrzeuges verbunden ist.

Bei diesem Ausführungsbeispiel handelt es sich um eine Festsattelbremse, die mit einem Bremssattel 2 an dem Achsanschluss 4 befestigt ist.

Hierzu sind Formschlussmittel 5 vorgesehen, die stiftartig ausgebildet sind und in axial sich erstreckenden Ausnehmungen 6 sowohl des Achsanschlusses 4 wie auch des Bremssattels 2 einliegen.

Diese Ausnehmungen 6, die in gleichmäßigen Winkelabstand über den Umfang des kreisförmigen Achsanschlusses 4 und einen Teilumfang des daran angepassten Bremssattels verteilt sind, sind jeweils als Halbloch ausgebildet, so dass sie übereinander liegend gemeinsam ein Loch ergeben, in dem ein Formschlussmittel 5 einliegt.

Entsprechend der Teilung der Ausnehmungen 6 kann die Bremse 1 in unterschiedlichen Winkelstellungen am Achsanschluss 4 befestigt werden. In dem in der Figur 1 gezeigten Beispiel sind drei mit a), b) und c) bezeichnete Stellungen erkennbar.

Durch den Formschluss mittels der Formschlussmittel 5 werden die beim Abbremsen einer Bremsscheibe 3, die mit einem nicht dargestellten Rad fest verbunden ist, auf den Bremssattel 2 einwirkenden Bremskräfte auf den gegenüber der Bremsscheibe 3 starren Achsanschluss 4 übertragen.

Zur axialen Sicherung der Bremse 1 gegenüber dem Achsanschluss 4 sind an einem Spannbügel 16 und/oder dem Bremssattel 2 Axialanschläge vorgesehen, an denen der Achsanschluss 4 anliegt.

Durch die geschlitzte und kegelförmige Ausführung der Formschlussmittel 5 werden Bearbeitungstoleranzen der Bauteile selbst und der Bauteile zueinander ausgeglichen und so eine Optimierung des Traglastanteils erreicht. Des weiteren ist eine spielfreie Einstellung und Fixierung möglich.

Zu diesem Zweck weist das Formschlussmittel 5 eine Spreizhülse 7 auf, die mit einer konischen Innenbohrung versehen ist und die mit ihrer Mantelfläche zumindest teilweise an den Leibungen der Ausnehmungen 6 anliegt.

Zur Spreizung der Spreizhülse 7 ist darin ein Spannelement 8 in Form eines Kegelbolzens geführt, der in seiner Koniszität der Kegelbohrung der Spreizhülse 7 angepasst ist.

An einem Ende ist das Spannelement 8 mit einem Gewindezapfen 11 versehen, auf den eine Mutter 10 aufgeschraubt ist, die sich im vorliegenden Ausführungsbeispiel mittelbar an einer Stirnseite der Spreizhülse 7 abstützt.

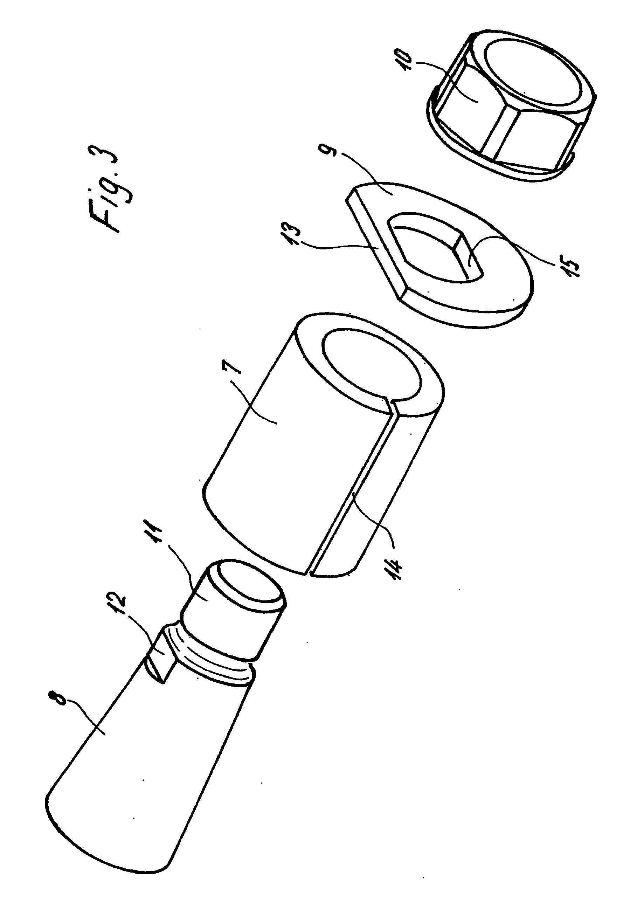

Wie insbesondere die Figur 3 sehr deutlich zeigt, ist die Spreizhülse 7 mit einem durchgehenden Längsschlitz 14 versehen, so dass beim Anziehen der Mutter 10 eine einwandfreie Spreizung der Spreizhülse 7 unter Anpressung an die Ausnehmungen 6 gewährleistet ist.

Zur Verdrehsicherung des Formschlussmittels 5 bei der Montage weist das Spannelement 8 auf seiner dem Gewindezapfen 11 zugewandten Seite des konischen Abschnitts zwei gegenüber liegende Abplattungen 12 auf, an denen Abflachungen 15 einer Sicherungsscheibe 9 anliegen, die wiederum verdrehsicher im Endbereich der Ausnehmungen 6 einerseits im Bremssattel 2 und andererseits im Achsanschluss 4 einliegt. Dabei ist die Sicherungsscheibe 9 zwischen der zugeordneten Stirnseite der Spreizhülse 7 und der Mutter 10 eingeklemmt.

Zur Verdrehsicherung im Bremssattel 2 bzw. im Achsanschluss 4 weist die ringförmige Sicherungsscheibe 9 eine Sehnenfläche 13 auf, die mit entsprechenden Ausformungen des Bremssattels 2 und/oder des Achsanschlusses 4 korrespondiert.

Selbstverständlich ist die erfindungsgemäße Verbindung nicht beschränkt auf den Einsatz einer Festsattelbremse, entsprechend dem dargestellten Ausführungsbeispiel, sondern durchaus auch einsetzbar bei einer Schwenk- oder Schiebesattelbremse, wobei im letzteren Fall ein Bremsträger mit dem Achsanschluss 4 verbunden ist.

### Bezugszeichenliste

- 1: Bremse
- 2: Bremssattel
- 3: Bremsscheibe
- 4: Achsanschluss
- 5: Formschlussmittel
- 6: Ausnehmung
- 7: Spreizhülse
- 8: Spannelement
- 9: Sicherungsscheibe
- 10: Mutter
- 11: Gewindezapfen
- 12: Abplattung
- 13: Sehnenfläche
- 14: Längsschlitz
- 15: Abflachung
- 16: Spannbügel
- 17: Axialanschlag

## Patentansprüche

1. Verbindung einer Bremse (1), insbesondere einer Scheibenbremse, mit einer Achse eines Fahrzeuges, vorzugsweise eines Nutzfahrzeuges, wobei ein Bremssteil der Bremse (1) in Form eines Bremsträgers oder Bremssattels (2) verdreh- und verschiebegesichert an einem starren Achsanschluss (4) der Achse befestigt ist, **dadurch gekennzeichnet, dass** zur Drehmomentenübertragung von der Bremse (1) auf die Achse das Bremsteil und der Achsanschluss (4) durch Formschlussmittel (5) miteinander verbunden sind, die jeweils in einander zugeordneten Ausnehmungen (6) des Achsanschlusses (4) und des Bremsteiles einliegen.

2. Verbindung nach Anspruch 1, **dadurch gekennzeichnet, dass** die Ausnehmungen (6) in gleichem Winkelabstand über zumindest einen Teilbereich des Umfangs des kreisförmigen Achsanschlusses (4) und des daran angepassten Bremsteiles angeordnet sind.

3. Verbindung nach einem der vorhergehenden Ansprüche, **dadurch gekennzeichnet, dass** die einander zugeordneten Ausnehmungen (6) des Achsanschlusses (4) und des Bremsteiles jeweils halblochartig ausgebildet sind.

4. Verbindung nach einem der vorhergehenden Ansprüche, **dadurch gekennzeichnet, dass** sich die Ausnehmungen (6) axial erstrecken.

5. Verbindung nach einem der vorhergehenden Ansprüche, **dadurch gekennzeichnet, dass** die Formschlussmittel (5) in axialer Richtung reibschlüssig im Bremsteil und im Achsanschluss (4) einliegen.

6. Verbindung nach einem der vorhergehenden Ansprüche, **dadurch gekennzeichnet, dass** das Formschlussmittel (5) eine Spreizhülse (7) aufweist, deren Außenfläche zumindest teilweise an der Leibung der Ausnehmungen (6) des Bremsteiles und des Achsanschlusses (4) angepresst ist.

7. Verbindung nach einem der vorhergehenden Ansprüche, **dadurch gekennzeichnet, dass** die Spreizhülse (7) eine konische Innenbohrung aufweist, in der ein bereichsweise als Kegelbolzen ausgebildete Spannelement (8) geführt ist, wobei die Koniszität des Kegelbolzens und der Innenbohrung der Spreizhülse (7) angepasst sind.

8. Verbindung nach einem der vorhergehenden Ansprüche, **dadurch gekennzeichnet, dass** die Koniszität des Spannelementes (8) und der Innenbohrung der Spreizhülse (7) in ihrer Neigung so ausgebildet ist, dass das Spannelement (8) selbsthemmend in der Spreizhülse (7) einliegt.

9. Verbindung nach einem der vorhergehenden Ansprüche, **dadurch gekennzeichnet, dass** sich an den konischen Teil des Spannelementes (8) ein Gewindezapfen (11) anschließt, auf den eine Mutter (10) aufgeschraubt ist, die sich mittelbar oder unmittelbar an der zugeordneten Stirnseite der Spreizhülse (7) abstützt.

10. Verbindung nach einem der vorhergehenden Ansprüche, **dadurch gekennzeichnet, dass** die Spreizhülse (7) einen durchgehenden Längsschlitz (14) aufweist.

11. Verbindung nach einem der vorhergehenden Ansprüche, **dadurch gekennzeichnet, dass** das Formschlussmittel (5) verdrehsicher in den Ausnehmungen (6) einliegt.

12. Verbindung nach einem der vorhergehenden Ansprüche, **dadurch gekennzeichnet, dass** zur Verdrehsicherung zwischen der Spreizhülse (7) und der Mutter (10) eine Sicherungsscheibe (9) eingeklemmt ist, die verdrehsicher in dem Bremsteil und/oder dem Achsanschluss einliegt.

13. Verbindung nach einem der vorhergehenden Ansprüche, **dadurch gekennzeichnet, dass** die ringförmige Sicherungsscheibe (9) außenseitig eine Sehnenfläche (13) aufweist, die mit einem angepassten Vorsprung des Bremsteiles oder des Achsanschlusses (4) korrespondiert.

14. Verbindung nach einem der vorhergehenden Ansprüche, **dadurch gekennzeichnet, dass** die Sicherungsscheibe (9) verdrehsicher auf dem Spannelement (8) gehalten ist.

15. Verbindung nach einem der vorhergehenden Ansprüche, **dadurch gekennzeichnet, dass** der dem Gewindezapfen (11) zugewandte konische Endbereich des Spannelementes (8) mit mindestens einer Abplattung (12) versehen ist, an der eine Abflachung (15) der Sicherungsscheibe (9) anliegt.

## Claims

1. Connecting assembly for connecting a brake (1), in particular a disc brake, to an axle of a vehicle, preferably a commercial vehicle, wherein a braking element of said brake (1) in the form of a brake-supporting plate or brake calliper (2), respectively, is fastened on a rigid axle connector (4) of said axle so as to be locked against rotating and sliding, **characterised in that**
for the transfer of a torque from said brake (1) to said axle, said braking element and said axle connector (4) are connected to each other by positive engaging means (5) whereof each is engaged in mutually associated recesses (6) of said axle connector (4) and said braking element.

2. Connecting assembly according to Claim 1, **characterised in that** said recesses (6) are disposed at an equal angular distance along at least one partial sector of the periphery of said circular axle connector (4) and said matched braking element.

3. Connecting assembly according to any of the preceding Claims, **characterised in that** each of said mutually associated recesses (6) of said axle connector (4) and braking element is configured in the form of a half-hole.

4. Connecting assembly according to any of the preceding Claims, **characterised in that** said recesses (6) extend along the axial direction.

5. Connecting assembly according to any of the preceding Claims, **characterised in that** said positive engaging means (5) are engaged with frictional contact along the axial direction in said braking element and in said axle connector (4).

6. Connecting assembly according to any of the preceding Claims, **characterised in that** said positive engaging means (5) comprises an expansion sleeve (7) whose outer surface, at least partly, is pressed against the intra-dos of said recesses (6) in said braking element and said axle connector (4).

7. Connecting assembly according to any of the preceding Claims, **characterised in that** said expansion sleeve (7) presents a conical internal bore in which a clamping element (8) is guided, which is configured in some sections as conical bolt, with the conicity of said conical bolt and said internal bore of said expansion sleeve (7) being adapted.

8. Connecting assembly according to any of the preceding Claims, **characterised in that** the conicity of said clamping element (8) and said internal bore of said expansion sleeve (7) is designed to present such an inclination that said clamping element (8) is engaged in said expansion sleeve (7) in a self-locking manner.

9. Connecting assembly according to any of the preceding Claims, **characterised in that** said conical section of said clamping element (8) is joined by a male screw end (11) onto which a nut (10) is screwed which is indirectly or directly supported on the associated front side of said expansion sleeve (7).

10. Connecting assembly according to any of the preceding Claims, **characterised in that** said expansion sleeve (7) presents a continuous longitudinal slot (14).

11. Connecting assembly according to any of the preceding Claims, **characterised in that** said positive engaging means (5) is engaged in said recesses (6) so as to be locked against torsion.

12. Connecting assembly according to any of the preceding Claims, **characterised in that** a locking disc (9) is clamped between said expansion sleeve (7) and said nut (10) for locking against torsion, which disc is engaged in said braking element and/or said axle connector such that it is locked against torsion.

13. Connecting assembly according to any of the preceding Claims, **characterised in that** said annular locking disc (9) presents a chord area (13) on the outside which corresponds to a matched projection of said braking element or of said axle connector (4).

14. Connecting assembly according to any of the preceding Claims, **characterised in that** said locking disc (9) is retained on said clamping element (8) such that is locked against torsion.

15. Connecting assembly according to any of the preceding Claims, **characterised in that** the conical end section of said clamping element (8), which faces said male screw end (11), is provided with at least one flattened section (12) against which bears a flattened section (15) of said locking disc (9).

## Revendications

1. Ensemble de liaison a relier un frein (1), en particulier un frein à disque, à un essieu d'un véhicule, de préférence d'un véhicule utilitaire, dans lequel un élément de freinage dudit frein (1) sous forme d'une flasque de frein ou respectivement d'un étrier de frein (2) est fixé à un connecteur rigide d'essieu (4) dudit essieu de façon, qu'il soit verrouillé contre la rotation et le glissement,
**caractérisé en ce**
**que,** pour le transfert d'un moment d'une force à partir dudit frein (1) vers ledit essieu, ledit élément de freinage et ledit connecteur d'essieu (4) soient reliés l'un à l'autre moyennant des moyens d'engrenage positif (5), dont chacun se trouve en prise dans des creux (6) mutuellement affectés connecteur d'essieu (4) et dudit élément de freinage.

2. Ensemble de liaison selon la revendication 1, **caractérisé en ce que** lesdits creux (6) sont disposés à distances angulaires égales le long d'au moins un secteur partiel de la périphérie dudit connecteur d'essieu circulaire (4) et dudit élément de freinage adapté.

3. Ensemble de liaison selon une quelconque des revendications précédentes, **caractérisé en ce que** chacun desdites creux mutuellement affectés (6) dudit connecteur d'essieu (4) et dudit élément de freinage est configuré sous forme d'un demi trou.

4. Ensemble de liaison selon une quelconque des revendications précédentes, **caractérisé en ce que** lesdits creux (6) s'étendent le long du sens axial.

5. Ensemble de liaison selon une quelconque des revendications précédentes, **caractérisé en ce que** lesdits moyens d'engrenage positif (5) se trouvent en prise, au contact de frottement le long du sens axial dans ledit élément de freinage et dans ledit connecteur d'essieu (4).

6. Ensemble de liaison selon une quelconque des revendications précédentes, **caractérisé en ce que** lesdits moyens d'engrenage positif (5) comprennent un manchon écarteur (7), dont la surface extérieure, au moins en partie, est pressée contre l'intrados desdits creux (6) dans ledit élément de freinage et ledit connecteur d'essieu (4).

7. Ensemble de liaison selon une quelconque des revendications précédentes, **caractérisé en ce que** ledit manchon écarteur (7) présente un alésage intérieur conique, dans lequel est guidé un élément de serrage (8), qui est configuré, dans quelques sections, en boulon conique, à la conicité dudit boulon conique et dudit alésage intérieur dudit manchon écarteur (7) étant adaptée.

8. Ensemble de liaison selon une quelconque des revendications précédentes, **caractérisé en ce que** la conicité dudit élément de serrage (8) et dudit alésage intérieur dudit manchon écarteur (7) est conçue d'une façon, qu'il y ait une telle inclinaison, que ledit élément de serrage (8) se trouve en prise dans ledit manchon écarteur (7) d'une manière autobloquant.

9. Ensemble de liaison selon une quelconque des revendications précédentes, **caractérisé en ce que** à ladite section conique dudit élément de serrage (8) se joigne un boulon fileté (11), sur lequel se visse un écrou (10), qui s'appuie indirectement ou directement sur le côté de face affecté manchon écarteur (7).

10. Ensemble de liaison selon une quelconque des revendications précédentes, **caractérisé en ce que** ledit manchon écarteur (7) présente une fente continue longitudinale (14).

11. Ensemble de liaison selon une quelconque des revendications précédentes, **caractérisé en ce que** lesdits moyens d'engrenage positif (5) se trouvent en prise dans lesdits creux (6) d'une telle manière, qu'ils soient bloque contre la torsion.

12. Ensemble de liaison selon une quelconque des revendications précédentes, **caractérisé en ce qu'**un disque de blocage (9) est serré entre ledit manchon écarteur (7) et ledit écrou (10) pour la blocage contre la torsion, à ce disque se trouvant en prise dans ledit élément de freinage et/ou ledit connecteur d'essieu d'une telle façon, qu'il soit bloqué contre la torsion.

13. Ensemble de liaison selon une quelconque des revendications précédentes, **caractérisé en ce que** ledit disque annulaire de blocage (9) présente une aire de corde (13) à sa face extérieure, qui corresponde à une saillie adaptée dudit élément de freinage ou dudit connecteur d'essieu (4).

14. Ensemble de liaison selon une quelconque des revendications précédentes, **caractérisé en ce que** ledit disque de blocage (9) est retenu sur ledit élément de serrage (8) d'une telle manière, qu'il soit bloque contre la torsion.

15. Ensemble de liaison selon une quelconque des revendications précédentes, **caractérisé en ce que** la partie terminale conique dudit élément de serrage (8), qui se trouve en face dudit boulon fileté (11), est pourvue d'au moins une partie aplatie (12), contre laquelle s'appuie une section aplatie (15) dudit disque de blocage (9).
